# EUROPÄISCHE PATENTSCHRIFT

(11) **EP 2 283 660 B1**
(45) Veröffentlichungstag und Bekanntmachung des Hinweises auf die Patenterteilung: **08.02.2012**
(21) Anmeldenummer: 09746190.9
(22) Anmeldetag: 04.05.2009
(51) Int. Cl.: H04R 25/00, B29C 33/00

(54) **VERFAHREN ZUR HERSTELLUNG EINER OTOPLASTIK**
METHOD FOR THE PRODUCTION OF AN OTOPLASTIC DEVICE
PROCÉDÉ DE FABRICATION D'UN MODELAGE OTOPLASTIQUE

(30) Priorität: 15.05.2008 CH 7412008
(43) Veröffentlichungstag der Anmeldung: 16.02.2011
(73) Patentinhaber: Otoplastik Bleuer & Fürst, 4601 Olten (CH)
(72) Erfinder: BLEUER, Beat, CH-4655 Stüsslingen (CH)
(74) Vertreter: Spierenburg, Pieter
(86) Internationale Anmeldenummer: PCT/IB2009/051805
(87) Internationale Veröffentlichungsnummer: WO 2009/138895

(56) Entgegenhaltungen:
- EP-A- 0 026 247
- US-A- 4 828 777

## Beschreibung

Die Erfindung betrifft eine Otoplastik nach dem Oberbegriff des Patentanspruchs 1 und ein Verfahren zu deren Herstellung nach dem Oberbegriff des Patentanspruchs 4.

### STAND DER TECHNIK

Unter Otoplastik versteht man die Herstellung eines individuellen Ohrpassstückes für z.B. Hörhilfen oder Gehörschutz durch den Hörgeräteakustiker. Der Begriff wird dabei sowohl für den Herstellungsvorgang als auch für das fertige Produkt verwendet.

Da die Form der Ohren sowie des Gehörganges individuell von Mensch zu Mensch unterschiedlich ist, bildet eine Abformung des Ohres die Grundlage für eine Otoplastik. Dafür wird nach otoskopischer Untersuchung und Reinigung des Ohres durch einen Hörgeräteakustiker zurerst ein individuell gefertigtes kleines Watteschirmchen oder Schaumstoffbällchen (eine sog. Tamponade) an einer feiner Schnur bis in den knöchernen Teil des äusseren Gehörganges eingebracht. Dieses dient als Schutz für das Trommelfell, um zu verhindern, dass noch weiche Abformmasse noch tiefer in den Gehörgang fliessen und das Trommelfell berühren und möglicherweise verletzen könnte.

Danach wird der Gehörgang und die für die zu fertigende Otoplastik benötigten Bereiche des Ohres mit Hilfe einer Abdruckspritze und aus zwei Komponenten bestehendem additionsvernetzendem Silikonmaterial abgeformt. Dieses Material härtet in wenigen Minuten aus und bildet einen Positivabdruck des Ohres. Dieser Abdruck wird vorsichtig entfernt und dient dem Otoplastiker als Vorlage für die Herstellung des Ohrpassstückes oder der Otoplastik.

Der weitere Verlauf der Herstellung kann zu einen durch Einscannen der Ohrabformung mit einem 3D-Scanner erfolgen. Die virtuelle Otoplastik wird am Computer bearbeitet und anschliessend an einem 3D-Drucker "gedruckt", der eine Vielzahl hauchdünner Kunststoffschichten übereinanderlegt und unter UV-Licht aushärten lässt, bis die Otoplastik fertig ist. Dieses Verfahren wird heute fast ausschliesslich bei der Herstellung von Schalen für Im-Ohr-Hörsysteme oder für Hinter-dem-Ohr Hörgeräte angewandt.

Die obige Herstellung mittels eines 3D-Scanners und hauchdünnen Kunststoffschichten ist sehr aufwendig und kostspielig, und verteuert somit ein mit einer individuellen Otoplastik angepasstes Hörgerät.

In EP-A-0026247 ist ferner ein Verfahren zur Herstellung eines Ohreinsatzes beschrieben. Ein Abdruck des Gehörgangs wird aus einem gummiartigen Material gebildet. Sodann wird eine dünne Folie aus Polycarbonat-Harz von 0.060 mm Dicke in einem Rahmen 19 gespannt und mit einer Heizeinrichtung 25 während etwa 3 Minuten aufgeheizt. Der Rahmen 19 wird dann heruntergelassen, so dass die Folie über den Abdruck des Gehörgangs gelegt wird. Durch Unterdruck wird die Folie straff über den Abdruck gezogen. Sodann wird der Abdruck aus der Folie gedrückt, so dass eine hohle Pressform entsteht. Dieser Pressform wird dann mit einem selbst-aushärtenden Acrylharz gefüllt. Ein Stück Draht und ein Rohr werden dann vertikal in den Acrylharz gedrückt, bis sie den Boden der Pressform erreichen. Sodann wird die Pressform in einem warmen Glyzerin-Bad bei Körpertemperatur gehalten. Nachdem der Pressling aus Acrylharz ausgehärtet ist, wird er manuell von der Pressform entfernt. Der so entstandene Ohreinsatz ist massiv ausgebildet (siehe Seite 8, Zeile 10 bis Seite 9, Zeile 30). Somit dient die hier beschriebene Folie lediglich als Hilfsmittel zur Herstellung des Ohreinsatzes.

### AUFGABE DER ERFINDUNG

Es ist nun Aufgabe der vorliegenden Erfindung eine Otoplastik anzugeben, die gewebefreundlich und druckfrei im Ohr getragen werden kann, und ferner ein einfaches und kostengünstiges Herstellungsverfahren für eine solche Otoplastik anzugeben.

### GEGENSTAND DER ERFINDUNG

Diese Aufgabe wird durch eine Otoplastik mit den Merkmalen des Anspruchs 1 und durch ein Herstellungsverfahren mit den Merkmalen des Patentanspruchs 4 gelöst.

Die erfindungsgemässe Otoplastik ist aus einem Kunststoffmaterial ausgebildet. Das erfindungsgemässe Herstellungsverfahren lässt sich besonders einfach mit einem handelsüblichen Tiefziehgerät, welches beispielsweise von einem Zahntechniker verwendet wird, durchführen. Mit dem erfindungsgemässen Herstellungsverfahren lässt sich ferner eine qualitativ ebenbürtige Otoplastik herstellen wie mit den bisher bekannten Verfahren.

### BESCHREIBUNG EINES AUSFÜHRUNGSBEISPIELES DER ERFINDUNG

Weitere Vorteile der Erfindung ergeben sich aus den abhängigen Patentansprüchen und aus der nachfolgenden Beschreibung, in welcher die Erfindung anhand eines Ausführungsbeispieles näher erläutert wird.

Wie bei dem bekannten Verfahren wird zunächst eine Abformung des Gehörgangs des Individuums vom Hörgeräteakustiker angefertigt, welche aus einem Material besteht, welches sich einerseits für eine einfache Entfernung aus dem Gehörgang und andererseits für das Tiefziehen eignet. Danach wird diese Abformung auf die Grundplatte eines Tiefziehgerätes aufgestellt, so dass beim Tiefziehen möglichst wenig Unterschnitt entsteht. Für das Tiefziehen hat sich besonders das Tiefziehgerät mit der Bezeichnung "Drufomat" der Fa. Dreve Dentamid GmbH, D-59423 Unna bewährt, welches normalerweise von Zahntechnikern benutzt wird. Sodann wird eine Kunststofffolie beispielsweise aus Copolyester, Polypropylen (PP), Polyäthylen (PE), Äthylen-Vinylacetat, einem Copolymerisat aus Äthyl-Vinylacetat, Polycarbonat (PC) oder Polyäthylenterephatalat mit einer gleichmässigen Wandstärke von 0,5 bis 3,5 mm, vorzugsweise 1,0 mm, auf die Abformung gelegt und im Tiefziehgerät erwärmt und so über die Abformung gezogen. Nach Abkühlung der so entstandenen Otoplastik wird diese von der Abformung gelöst und mit handelsüblichen Materialien in der gewünschten Form bearbeitet. Somit wird eine abbildungsgenaue Otoplastik von der Abformung nachgebildet. Je nach Grösse des Tiefziehgerätes können in einem Arbeitsgang mehrere Abformungen mit einer Folie überzogen und somit mehrere Otoplastiken hergestellt werden. In der fertigen als Folie ausgebildeten Otoplastik können nach Bedarf Öffnungen in verschiedenen Grössen, Formen und an beliebigen Stellen angebracht werden. Die Otoplastik kann auch mit einer Ausziehhilfe versehen werden, um sie einfach in den Gehörgang hineinzuführen und aus dem Gehörgang herauszunehmen. Die fertig hergestellte Otoplastik kann anschliessend mit einem zusätzlichen Material beschichtet werden, um eine bessere Haftung im Gehörgang zu erzielen.

Die derart als Folie hergestellte, individuell angepasste Otoplastik ist gewebefreundlich, druckfrei und kann mit beliebigen Systemen im Hörgerätesektor kombiniert werden.

## Patentansprüche

1. Otoplastik aus Kunststoff, welche mittels eine Abformung des Gehörganges eines Individuums angefertigt ist, **dadurch gekennzeichnet, dass** sie als dünne Folie mit einer gleichmässigen Wandstärke ausgebildet ist.

2. Otoplastik nach Anspruch 1, **dadurch gekennzeichnet, dass** die Folie eine Wandstärke von 1 bis 3 mm aufweist.

3. Otoplastik nach Anspruch 1 oder 2, **dadurch gekennzeichnet, dass** die Folie aus Polypropylen, Polyäthylen oder Polycarbonat besteht.

4. Verfahren zur Herstellung von einer Otoplastik, welche mittels einer Abformung des Gehörganges eines Individuums angefertigt wird, **dadurch gekennzeichnet, dass** eine dünne Folie über die Abformung gelegt und diese in einem Tiefziehprozess erwärmt und somit abbildungsgenau von der Abformung nachgebildet wird, und nach Abkühlung die als Schale entstandene Otoplastik von der Abformung gelöst wird.

5. Verfahren nach Anspruch 4, **dadurch gekennzeichnet, dass** die fertige Otoplastik mit handelsüblichen Materialien in der gewünschten Form bearbeitet wird.

6. Verfahren nach Anspruch 4 oder 5, **dadurch gekennzeichnet, dass** in der fertigen als Folie ausgebildeten Otoplastik Öffnungen in verschiedener Grössen und Formen an beliebigen Stellen angebracht werden.

7. Verfahren nach einem Ansprüche 4 bis 6, **dadurch gekennzeichnet, dass** die Otoplastik mit einer Ausziehhilfe versehen wird.

8. Verfahren nach einem der Ansprüche 4 bis 7, **dadurch gekennzeichnet, dass** die fertig hergestellte Otoplastik mit einem zusätzlichen Material beschichtet wird, um eine bessere Haftung im Gehörgang zu erzielen.

9. Verfahren nach einem der Ansprüche 4 bis 8, **dadurch gekennzeichnet, dass** die Folie eine gleichmässige Wandstärke von 1 bis 3 mm aufweist.

10. Verfahren nach einem der Ansprüche 4 bis 9, **dadurch gekennzeichnet, dass** die Folie aus Polypropylen, Polyäthylen oder Polycarbonat besteht.

## Claims

1. An earmold made of plastic, produced by means of an impression of the auditory passage of an individual, **characterized in that** it is arranged as a thin film of even wall thickness.

2. An earmold according to claim 1, **characterized in that** the film has a wall thickness of 1 to 3 mm.

3. An earmold according to claim 1 or 2, **characterized in that** the film consists of polypropylene, polyethylene or polycarbonate.

4. A method for producing an earmold which is produced by means of an impression of the auditory passage of an individual, **characterized in that** a thin film is placed over the impression and it is heated in a deep-drawing process and is thereby reproduced from the impression in a manner identical thereto, and the earmold produced as a shell is detached from the impression after cooling.

5. A method according to claim 4, **characterized in that** the finished earmold is processed with conventional materials in the desired shape.

6. A method according to claim 4 or 5, **characterized in that** openings in different sizes and shapes are applied at different locations to the finished earmold which is arranged as a film.

7. A method according to one of the claims 4 to 6, **characterized in that** the earmold is provided with a pull-out aid.

8. A method according to one of the claims 4 to 7, **characterized in that** the finished earmold is coated with an additional material in order to achieve better adhesion in the auditory passage.

9. A method according to one of the claims 4 to 8, **characterized in that** the film has an even wall thickness of 1 to 3 mm.

10. A method according to one of the claims 4 to 9, **characterized in that** the film consists of polypropylene, polyethylene or polycarbonate.

## Revendications

1. Élément otoplastique en matière plastique réalisé au moyen d'une empreinte du conduit auditif d'un individu, **caractérisé en ce qu'**il est réalisé sous la forme d'une feuille mince ayant une épaisseur de paroi uniforme.

2. Élément otoplastique selon la revendication 1, **caractérisé en ce que** la feuille a une épaisseur de paroi de 1 à 3 mm.

3. Élément otoplastique selon la revendication 1 ou 2, **caractérisé en ce que** la feuille est faite de polypropylène, de polyéthylène ou de polycarbonate.

4. Procédé pour la fabrication d'une élément otoplastique réalisé au moyen d'une d'empreinte du conduit auditif d'un individu, **caractérisé en ce qu'**une feuille mince est posée par-dessus l'empreinte et chauffée lors d'une opération d'emboutissage profond et l'empreinte est ainsi fidèlement reproduite, et l'élément otoplastique en forme de coque obtenu est détaché de l'empreinte après refroidissement.

5. Procédé selon la revendication 4, **caractérisé en ce que** l'élément otoplastique fini est travaillé avec des matériaux disponible dans le commerce pour lui donner la forme souhaitée.

6. Procédé selon la revendication 4 ou 5, **caractérisé en ce que** des ouvertures de différentes tailles et formes sont ménagées à des endroits quelconques dans l'élément otoplastique fini réalisé sous la forme d'une feuille.

7. Procédé selon l'une des revendications 4 à 6, **caractérisé en ce que** l'élément otoplastique est muni d'une aide à l'extraction.

8. Procédé selon l'une des revendications 4 à 7, **caractérisé en ce que** l'élément otoplastique fini est enduit d'un matériau supplémentaire afin d'obtenir une meilleure adhérence dans le conduit auditif.

9. Procédé selon l'une des revendications 4 à 8, **caractérisé en ce que** la feuille présente une épaisseur de paroi uniforme de 1 à 3 mm.

10. Procédé selon l'une des revendications 4 à 9, **caractérisé en ce que** la feuille est faite de polypropylène, de polyéthylène ou de polycarbonate.
